# EUROPEAN PATENT SPECIFICATION

(11) **EP 1 808 349 B1**
(45) Date of publication and mention of the grant of the patent: **06.08.2008**
(21) Application number: 07100209.1
(22) Date of filing: 08.01.2007
(51) Int. Cl.: B60W 10/18, B60W 10/04

(54) **"Manual actuating device for driving a motor-vehicle, particularly for assisting persons impaired in the use of the legs"**
Manuelle Betätigungsvorrichtung zum Fahren eines Kraftfahrzeuges, insbesondere zur Unterstützung von Menschen, die in der Benutzung der Beine beeinträchtigt sind.
Dispositif de contrôle manuel pour conduire un véhicule à moteur, en particulier pour assister des personnes handicapées dans l'utilisation des jambes.

(30) Priority: 11.01.2006 IT TO20060018
(43) Date of publication of application: 18.07.2007
(73) Proprietor: Kivi S.R.L, 14040 Vigliano (IT)
(72) Inventor: Giberti, Giancarlo, 14040, Vigliano (Asti) (IT)
(74) Representative: Notaro, Giancarlo

(56) References cited:
- ES-A6- 2 014 370
- FR-A1- 2 412 437
- FR-A1- 2 597 038
- GB-A- 1 169 568
- US-A- 2 471 244

## Description

The present invention relates to the field of manual actuating devices for use in driving motor vehicles, particularly for assisting people impaired in the use of the legs. In particular, the invention relates to an actuating device of the type including a rim element intended for being arranged below the steering wheel of the motor vehicle, substantially coaxially to the steering wheel, said rim element being mounted movable relative to a support structure in a direction substantially parallel to the axis of the steering wheel in order to control a working function of the motor vehicle, such as for example the accelerator function or the brake function.

Devices of the above mentioned type have been known and used since long (see for example FR 2 597 038 and ES 2 014 370).

In such known devices, the rim element can be actuated by the driver by pulling it towards the steering wheel without leaving at the same time the grip of the hands on the steering wheel.

The object of the present invention is to improve the devices of the above mentioned known type by making particularly easy for the driver the actuation of the rim element and particularly allowing the driver to adopt different actuating "styles" or modes during the drive.

In view of achieving this object, the subject of the invention is an actuating device having the features which have been stated at the beginning of the present description and further characterized in that the aforesaid rim element is displaceable in any of two opposite directions starting from a rest position, and in that the actuating device operates a same working function, for example the accelerator function or the brake function, in both movement directions of the rim.

Thanks to the aforesaid features, the driver can operate the rim element both by pulling it towards the steering wheel, as in the case of the known devices, and also by pushing it away from the steering wheel.

It follows that the driver can operate the rim element in a series of different actuating ways, which differ between them both with respect to the position of the hand which operates the rim element, and with respect to the part of the hand used to operate the rim element, and also for the movement that the hand has to carry out for executing the control, as it will result evident from the following description.

In the preferred embodiment of the invention, the aforesaid support structure presents spring means for returning the rim element towards its rest position after it has been moved apart therefrom in any one of its two displacement directions. In particular, the device includes a abutment element movable with the rim and arranged between two opposite fixed surfaces and said springspring means include first and second springs each of which is interposed between said abutment element, from one side, and a respective one of said opposite fixed surfaces, from the other side.

Always referring to the preferred embodiment, the device includes a plate firmly connected with the rim element and slidably mounted on a longitudinal guide element making part of said support structure, said abutment element in common with the two springs being carried from said plate and said opposite fixed surfaces being defined by elements fastened to said guide element. Preferably, the two springs are two helical coaxial springs arranged one after the other.

According to a further preferred feature of the invention, the device further includes a damping device suitable for controlling the return stroke of the rim element towards its rest position.

Finally, the device according to the invention is preferably characterized in that it further includes at least a push-button element associable with the steering wheel of the motor vehicle, which is equipped with means for transmitting to the rim element a force exerted on the push-button element. The arrangement of such push-button element imparts to the device of the invention further advantages from the versatility point of view.

Further features and advantages of the invention will result from the following description with reference to the enclosed drawings, provided by mere way of non limiting example, wherein:
- figure 1 is a perspective view of a driver's seat of a motor vehicle equipped with the device according to the invention,
- figure 2 is a top partial perspective view, in an enlarged scale, of the device of the invention,
- figures 3, 4 are perspective views corresponding with the one of figure 2, which show the device in two different working conditions,
- figure 5 is a sectional view and in an enlarged scale of a particular of the device according to the invention,
- figure 6 is a sectional view according to the line VI-VI of figure 5,
- figures 7-10 are perspective views which show different ways of using the device according to the invention,
- figure 11 shows a variation of figure 1, and
- figures 12, 13 are two perspective views which show the push-button element foreseen in the variation of figure 11 in the rest condition and the working condition, respectively, and
- figures 14, 15 show another embodiment of the device according to the invention and the relative ways of use.

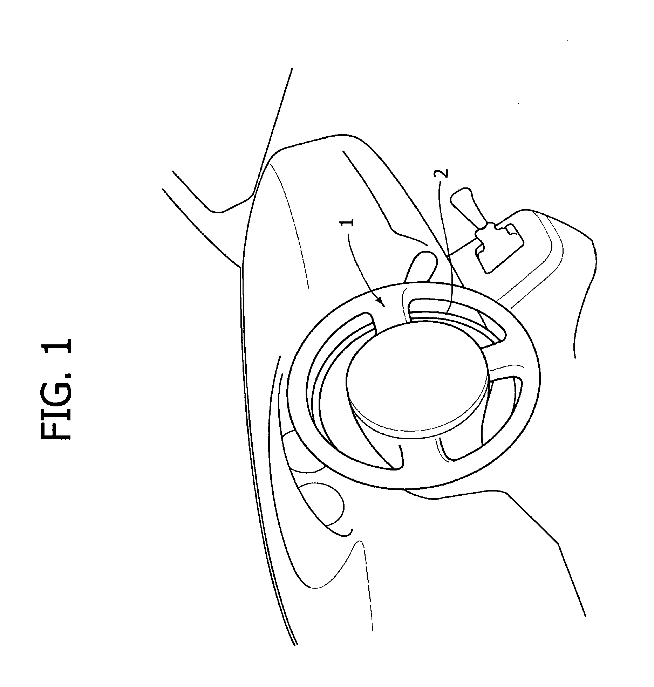

In figure 1, numeral 1 generally shows a steering wheel of a motor vehicle to which a device according to the invention, including a rim element 2 arranged below the steering wheel and substantially concentrically therewith is associated. The rim element 2 is movable with respect to a fixed support structure along the direction of the axis of the steering wheel 1 for actuating a working function of the motor vehicle, such as for example the accelerator function or the brake function.

Theoretically, the displacement of the rim element 2 can cause the actuation, for example, of the accelerator or the brake by means of a mechanical transmission, likewise to what is foreseen in the less recent devices of the type to which the present invention is related. More preferably, however, the device according to the invention is carried out, in a per se known way, by arranging a sensor of the rim element position (for example a potentiometer) and electronic control means intended for receiving the output signal from the sensor and actuating, as a consequence, an actuator device of the considered working function, for example the accelerator or the brake. The details relating to such sensor, the electronic control unit and the actuator device controlled therefrom are not shown herein as they do not fall, per se, within the ambit of the present invention, since they can be carried out in any known ways. Furthermore, the removal of such execution details of the drawings makes these latter of a prompter and easier comprehension.

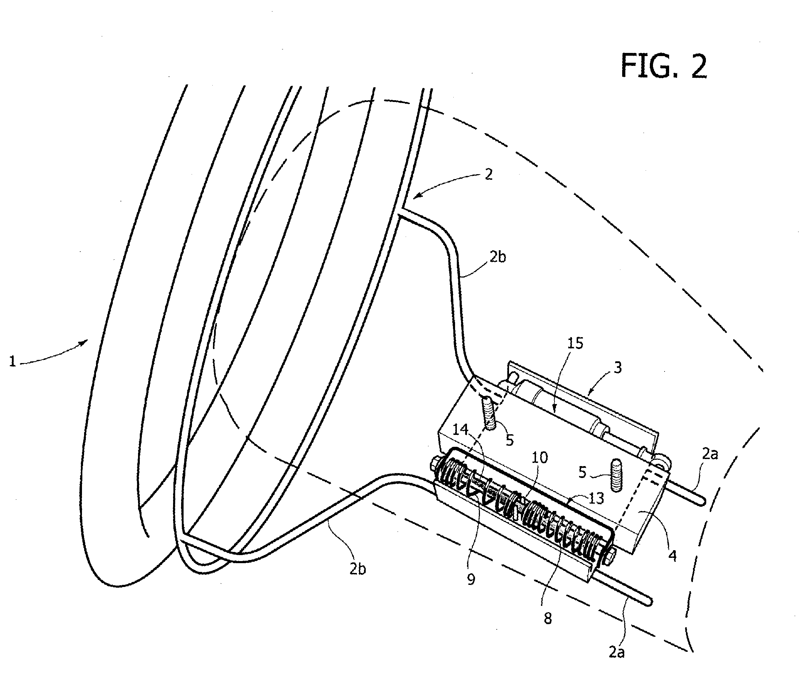

The main feature of the device according to the invention is that the rim element can be displaced starting from a rest position thereof, both approaching it to the steering wheel and away from the steering wheel, obtaining in each case the actuation of the controlled working function. In the preferred embodiment shown herein, the rim element 2 (see figures 2-4) is firmly connected with a plate 3 which is slidably mounted in a direction parallel to the axis of the steering wheel 1 on a longitudinal guide element 4 fixed by means of screws 5 to a fixed support structure.

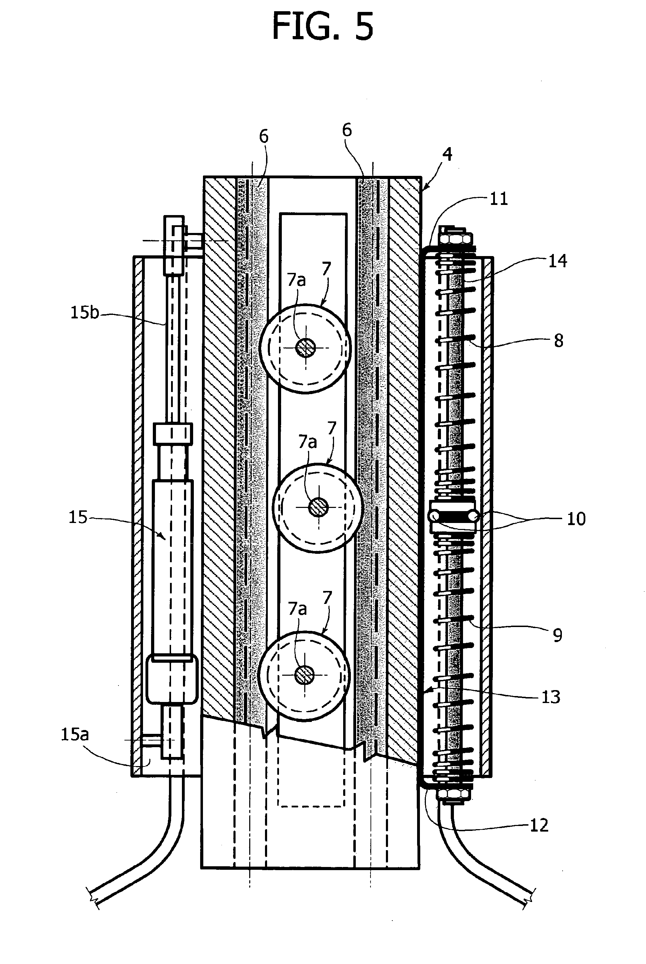

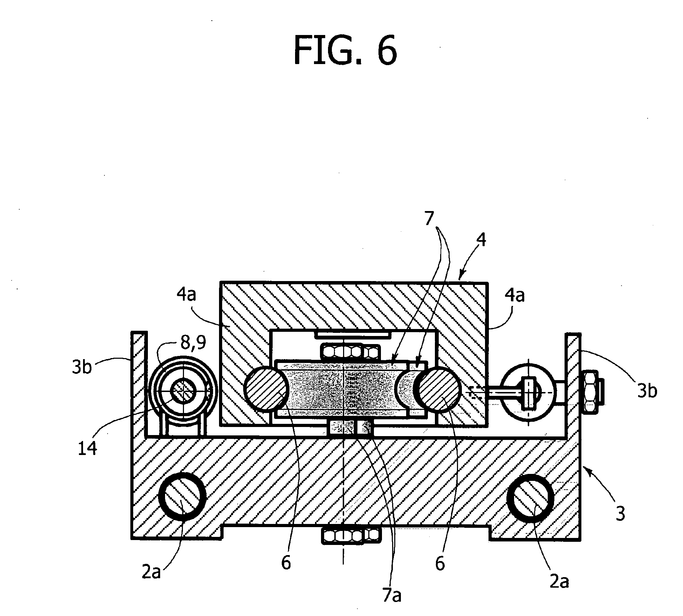

With reference to the specific execution example shown herein (see also figures 5, 6) the plate 3 shows two longitudinal through-holes 3a within which two end branches 2a of a couple of arms 2b protruding from the rim element 2 are fixed.

The longitudinal guide element 4 consists of a substantially U-shaped cross section-metal draw-piece, having two wings 4a on which inner opposite surfaces two metal rods 6, defining two guide rails, are fixed. The plate 3 supports three rollers 7 (see in particular figures 5, 6) in a freely rotatable way around axes 7a orthogonal to the general plane of the plate 3. Each of the rollers 7 is in a rolling engagement with one or the other of the guide rails 6, and is arranged within the channel defined by the U-shaped draw piece 4.

Thanks to the aforesaid arrangement, the plate 3, and the rim element 2 fixed thereto are movable along a direction parallel to the axis of the steering wheel relative to the support structure defined by the draw piece element 4, which is in turn fixed to a part of the motor vehicle structure.

Still with reference to figure 5, the device includes two helical springs 8, 9 coaxially arranged one after the other having adjacent ends both reacting against a common abutment element 10, which in the more specific example consists of a couple of pegs carried by the plate 3. The remote ends of the two springs 8, 9 react, on the contrary, against two opposite fixed surfaces 11, 12 defined by the bent ends of a bracket 13 fixed on a side of the longitudinal guide element 4. Finally, the two springs 8, 9 are crossed by a guide rod 14 fixed to the two bent ends of the bracket 13.

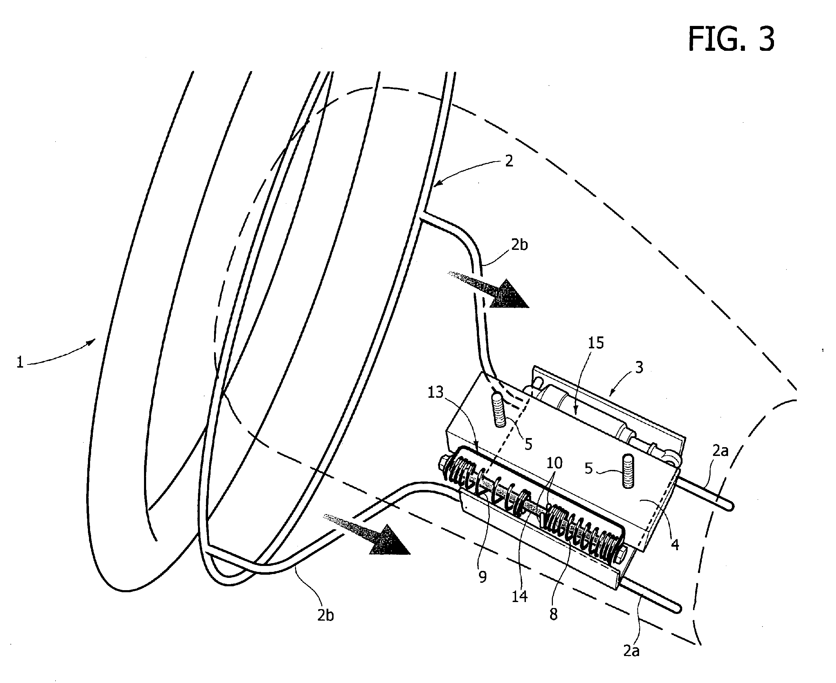

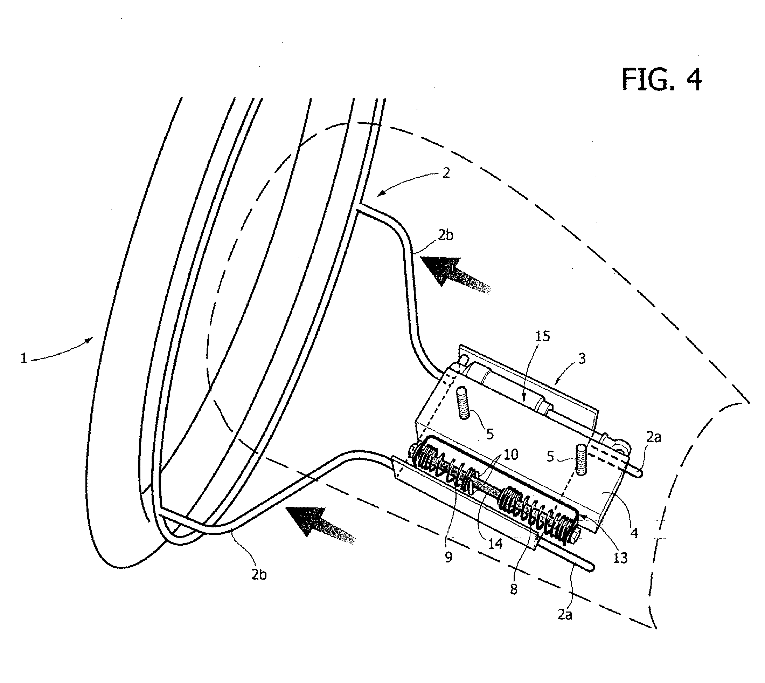

In the rest condition, the two springs 8, 9 tend to hold the common abutment element 10, and accordingly the plate 3 and the rim element 2, in a rest position corresponding with the deactivated condition of the working function controlled by the rim element. Starting from such position, the rim element 2 can be operated in both directions, that is by pulling it towards the steering wheel and by pushing it away from the steering wheel, obtaining in each case the operation of the controlled working function. Figure 2 shows the device in the rest condition, whereas figures 3, 4 show the device in the operation condition, by means of a thrust of the rim element away from the steering wheel and in the operation condition, by pulling the rim element towards the steering wheel, respectively. When the action of the hand, or the hands, of the driver on the rim element is released, the springs 8, 9, or rather the one of such springs which has been charged during the driving operative step, provide to bring back the rim element in the rest condition of figure 3. The movement of the rim element during such return stroke is damped by a hydraulic damping device 15 having a body connected with one end 15a to one of two side wings 3b of the plate 3, and a stem 15b having its end connected with the longitudinal guide element 4.

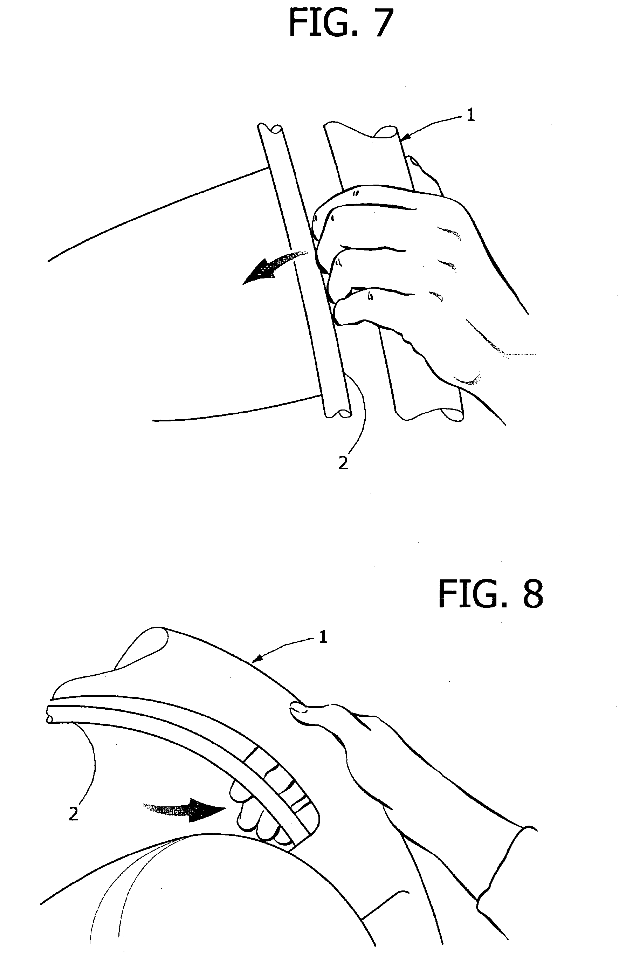

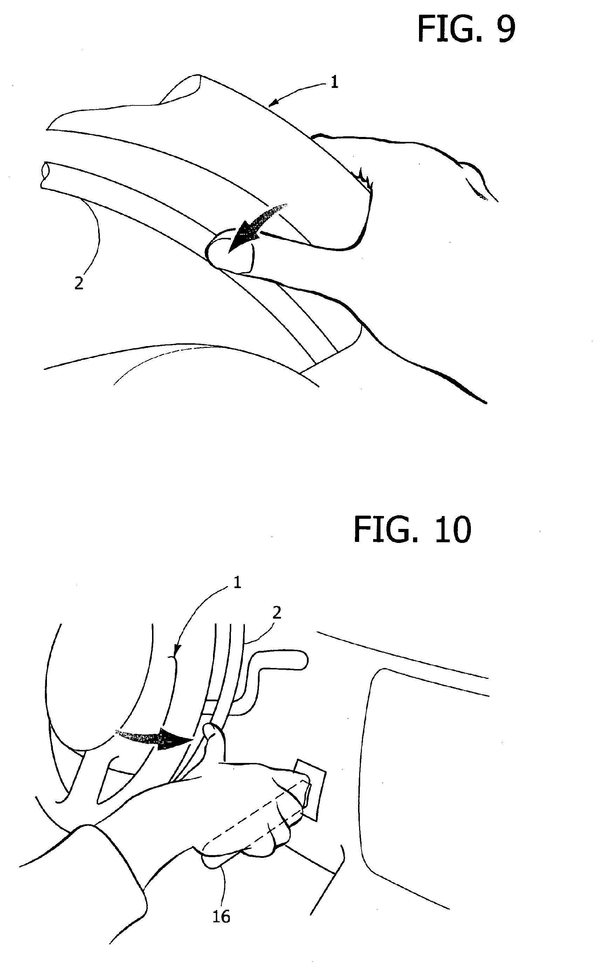

The possibility provided by the device according to the invention of driving the controlled working function moving the rim element both by pushing and by pulling is translated in a great versatility of the device. Figures 7-10 show some different ways of operation. In particular, the drive can be imparted by pushing the rim element 2 downwards with the back of the hand or hands (figure 7). Otherwise, the control can be imparted by pushing the rim downwards with the thumb or other fingers passing inside the steering wheel (figure 9). Otherwise, the control can be imparted by pushing the rim downwards with the thumb or other fingers while the palm of the hand is rested for example on a lever 16 arranged on the dashboard of the motor vehicle adjacent to the steering wheel (figure 10) and typically used in this kind of vehicles for the operation of the brake. Or yet, the drive can be imparted by exerting a traction movement on the rim element 2, by approaching it towards the steering wheel with one hand, or both hands, or only with some fingers of the hand (figure 8).

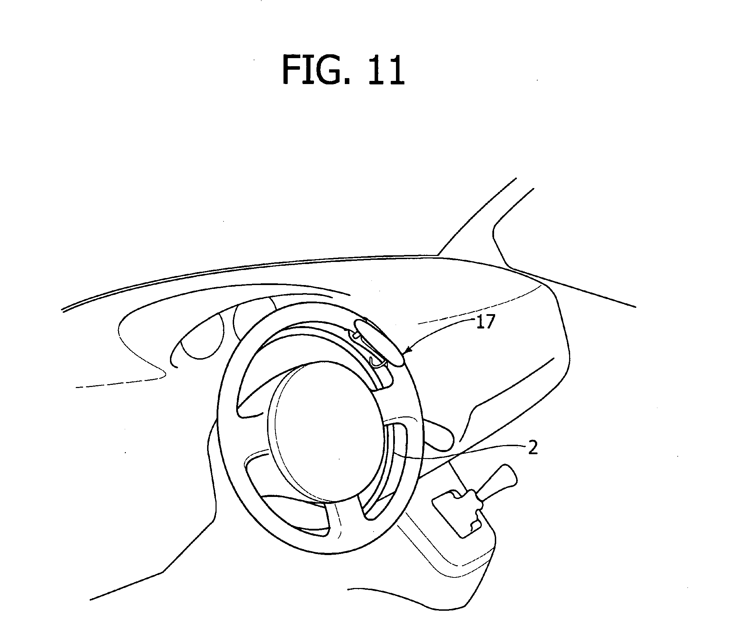

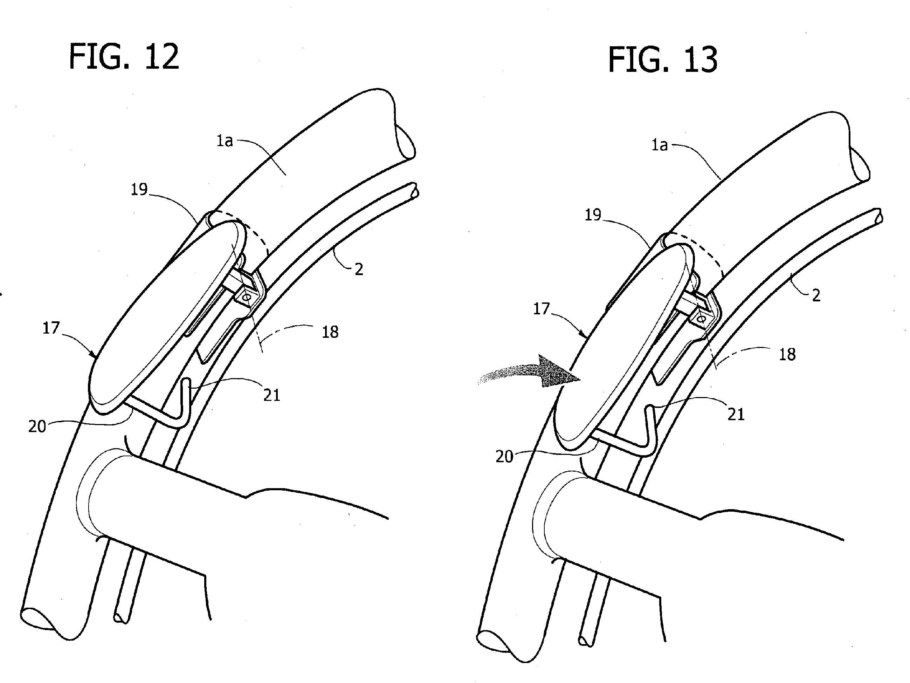

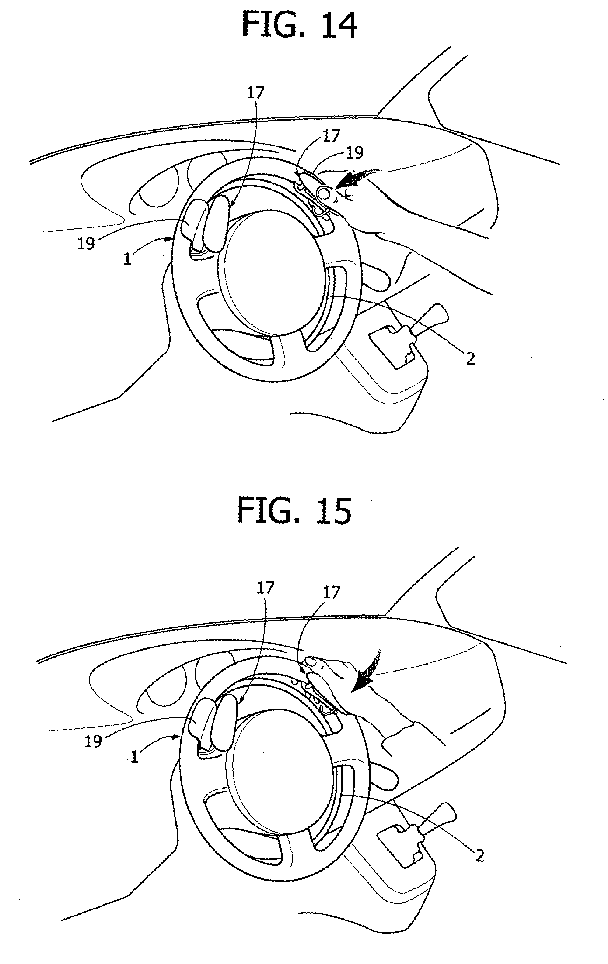

Further ways of use are feasible with an embodiment which foresees the arrangement above the steering wheel of a push-button element (figure 11) or two push-button elements (figures 14, 15). As it can be clearly seen in figures 12, 13, each push-button element, generally shown by numeral 17, consists of a lever jointed mounted around an axis 18 on a cuff support 19 which can be fastened on the crown 1a of the steering wheel 1. The lever forming the push-button element 17 is equipped with a push means 20 having an end portion 21 suitable for coming into a push contact with the rim element 2. Preferably, to the joint 18 of the push-button element 17, spring means (not visible in the drawings), for example formed by the needle spring, which tend to return the push-button 17 towards a rest position (figure 12), in which the push means 20 is separated from the rim element 2, are associated. In the specific example shown, the end portion 21 consists of a bent portion of the arm forming the push means 20, adapted to beat against the lower surface of the steering wheel in order to define the limit position towards which the push-button element 17 is pushed by the aforesaid spring means. Starting from such limit position, the push-button element 17 can be pushed, in such a way to bring the end portion 21 of the push means 20 into contact with the rim element 2 and transmit in this way the push action imparted on the push-button 17 to the rim element. Figures 14, 15 show two different ways of using such device, wherein the rim element 2 is pushed downwards with the help of one or both the push-button elements 17 which can be operated each with one or more fingers (figure 14) or with the palm of the hand (figure 15).

As it is apparent from the above description and the enclosed drawings, the device according to the invention therefore ensures a high versatility for the user, as well as a considerable comfort of use. The particular structure and arrangement above described further allow a particularly effective and reliable functioning of the device in every use condition.

Furthermore, the device is also characterized in that it allows the driving of the controlled working function always ensuring the best guide security and particularly allowing the driver to maintain a firm grip on the steering wheel of the motor vehicle during the operation of the device.

Last but not least, there is the advantage of obtaining all the aforesaid results with a relatively simple structure, inexpensive to produce.

According to the invention, a push-button or a lever, in a comfortable position for the driver, for example in the control lever of the brake or on the dashboard, can be foreseen in order to drive a partialization function of the accelerator, for an operation mode of the engine with a low fuel consumption.

Obviously, further without prejudice to the principles of the invention, construction details and embodiments could widely vary with respect to what has been described and shown by mere way of example, without leaving for this reason the ambit of the present invention.

## Claims

1. Manual actuating device for use in driving a motor vehicle, particularly for assisting people impaired in the use of the legs, including a rim element (2) intended for being arranged below the steering wheel (1) of the motor vehicle, substantially coaxially to the steering wheel, said rim element (2) being mounted movable relative to a support structure (4) in a direction substantially parallel to the axis of the steering wheel (1) in order to control a working function of the motor vehicle, such as for example the accelerator function or the brake function,
**characterized in that** said rim element (2) is displaceable in any of two opposite directions starting from a rest position, and **in that** in both its directions of movement the rim operates a same working function, for example the accelerator function or the brake function.

2. Manual actuating device according to claim 1, **characterized in that** it includes spring means for returning the rim element (2) towards its rest position after it has been driven apart therefrom in any one of the two displacement directions thereof.

3. Manual actuating device according to claim 2, **characterized in that** it includes an abutment element (10) movable with the rim element (2) and arranged between two opposite fixed surfaces (11, 12) and that said spring means include a first and a second springs (8, 9) each of which is interposed between said abutment element (10), from one side, and a respective one of said opposite fixed surfaces (11, 12), from the other side.

4. Manual actuating device according to claim 3, **characterized in that** the device includes a plate (3) firmly connected with the rim element (2) and slidably mounted on a longitudinal guide element (4) making part of said support structure, said abutment element (10) in common with the two springs (8, 9) being carried by said plate (3) and said fixed opposite surfaces (11, 12) being defined by elements fixed to said guide element (4).

5. Manual actuating device according to claim 4, **characterized in that** the two springs (8, 9) are two coaxial helical springs arranged one after the other.

6. Manual actuating device according to claim 4, **characterized in that** said longitudinal guide element (4) is a profile with a substantially U-shaped cross-section, and that said plate (3) is slidably mounted on said longitudinal guide element (4) by means of two opposite guide rails (6) carried by the two wings (4a) of the U-shaped profile (4) and a plurality of wheels (7) carried by said plate (3) and freely rotatable around axes (7a) orthogonal to the plate (3) and in a rolling engagement, within the channel of the U-shaped profile (4), with one or the other of said guide rails (6).

7. Manual actuating device according to claim 1, **characterized in that** it has a damper (15) suitable to control the return stroke of the rim element (2) towards its rest position.

8. Manual actuating device according to claim 4, **characterized in that** it has a fluid damping device suitable to control the return stroke of the rim element towards its rest position, said fluid damping device being operatively interposed between said plate (3) and said guide element (4).

9. Manual actuating device according to claim 1, **characterized in that** the device includes at least a push-button element (17) associable with the steering wheel (1) of the motor vehicle, said push-button element (17) being equipped with means (20) for transmitting to said rim element (2) a force exerted on the push-button element (17).

10. Manual actuating device according to claim 9, **characterized in that** said push-button element (17) is arranged for being mounted on the side of the steering wheel faced towards the driver.

11. Manual actuating device according to claim 9, **characterized in that** said push-button element is a lever jointed to a cuff means (19) which can be fastened on the crown (1a) of the steering wheel (1).

12. Manual actuating device according to claim 11, **characterized in that** said lever is mounted on said cuff means (19) such that the lever results placed within the crown (1a) of the steering wheel, such that it can be actuated without loosen the grip of the hands from the steering wheel.

13. Manual actuating device according to claim 9, **characterized in that** said means for transmitting the thrust exerted on the push-button element (17) to the rim element (2) consist of a push means (20) connected with the push-button element (17) and having an end portion (21) suitable to be contacted and pushed by the rim element (2).

14. Manual actuating device according to claim 13, **characterized in that** to the push-button element (17), spring means for drawing it back towards a rest position, in which said push means (20) is separated from the rim element, are associated.

## Patentansprüche

1. Manuelle Betätigungsvorrichtung zur Verwendung beim Fahren eines Kraftfahrzeuges, insbesondere zur Unterstützung von Menschen, die in der Benutzung der Beine beeinträchtigt sind, mit einem Kranzelement (2), das für eine Anordnung unter dem Lenkrad (1) des Kraftfahrzeugs im Wesentlichen koaxial zu dem Lenkrad gedacht ist, wobei das Kranzelement (2) in Bezug auf eine Stützkonstruktion (4) in einer Richtung im Wesentlichen parallel zu der Achse des Lenkrades (1) beweglich montiert ist, um eine Betriebsfunktion des Kraftfahrzeugs wie zum Beispiel die Beschleunigungsfunktion oder die Bremsfunktion zu steuern,
**dadurch gekennzeichnet, dass** das Kranzelement (2) in jeder von zwei entgegengesetzten Richtungen ausgehend von einer Ruhestellung verschiebbar ist, und
**dadurch**, dass der Kranz in seinen beiden Bewegungsrichtungen eine gleiche Betriebsfunktion wie zum Beispiel die Beschleunigungsfunktion oder die Bremsfunktion ausführt.

2. Manuelle Betätigungsvorrichtung nach Anspruch 1, **dadurch gekennzeichnet, dass** sie eine Federeinrichtung umfasst, um das Kranzelement (2) in seine Ruhestellung zurückzuführen, nachdem es daraus in eine von seinen zwei Verschiebungsrichtungen ausgelenkt worden ist.

3. Manuelle Betätigungsvorrichtung nach Anspruch 2, **dadurch gekennzeichnet, dass** sie ein mit dem Kranzelement (2) verschiebbares und zwischen zwei gegenüberliegenden festgelegten Oberflächen (11, 12) angeordnetes Widerlagerelement (10) enthält, und dass die Federeinrichtung eine erste und eine zweite Feder (8, 9) enthält, von denen jede zwischen dem Widerlagerelement (10) an der einen Seite, und einer entsprechenden von den gegenüberliegenden festgelegten Oberflächen (11, 12) an der anderen Seite, eingefügt ist.

4. Manuelle Betätigungsvorrichtung nach Anspruch 3, **dadurch gekennzeichnet, dass** die Vorrichtung eine Platte (3) enthält, die fest mit dem Kranzelement (2) verbunden ist, und verschiebbar auf einem ein Teil der Stützkonstruktionen bildenden Längsführungselement (4) montiert ist, wobei das Widerlagerelement (10) gemeinsam mit den zwei Federn (8, 9) von der Platte (3) getragen wird und die festgelegten gegenüberliegenden Oberflächen (11, 12) durch Elemente bestimmt sind, die an dem Führungselement (4) befestigt sind.

5. Manuelle Betätigungsvorrichtung nach Anspruch 4, **dadurch gekennzeichnet, dass** die zwei Federn (8, 9) zwei koaxiale Schraubenfedern sind, die hintereinander angeordnet sind.

6. Manuelle Betätigungsvorrichtung nach Anspruch 4, **dadurch gekennzeichnet, dass** das Längsführungselement (4) ein Profil mit einem im Wesentlichen U-förmigen Querschnitt ist, und dass die Platte (3) verschiebbar auf dem Längsführungselement (4) angeordnet ist mittels zweier gegenüberliegend angeordneter Führungsschienen (6), die von den zwei Flügeln (4a) des U-förmigen Profils (4) gestützt werden, und einer Vielzahl von Rädern (7), die von der Platte (3) gestützt, frei drehbar um senkrecht zu der Platte (3) angeordnete Achsen (7a) sind, und innerhalb des Kanals des U-förmigen Profils (4) in einer Rollbewegung im Eingriff mit der einen oder der anderen der Führungsschienen (6) stehen.

7. Manuelle Betätigungsvorrichtung nach Anspruch 1, **dadurch gekennzeichnet, dass** sie einen Dämpfer (15) aufweist, der geeignet ist, den Rückbewegungshub des Kranzelementes (2) zu seiner Ruhestellung zu steuern.

8. Manuelle Betätigungsvorrichtung nach Anspruch 4, **dadurch gekennzeichnet, dass** sie eine Fluiddämpfungseinrichtung besitzt, die geeignet ist, den Rückbewegungshub des Kranzelementes zu seiner Ruhestellung zu steuern, wobei die Fluiddämpfungseinrichtung funktionell zwischen der Platte (3) und dem Führungselement (4) eingefügt ist.

9. Manuelle Betätigungsvorrichtung nach Anspruch 1, **dadurch gekennzeichnet, dass** die Vorrichtung wenigstens ein Drucktastenelement (17) enthält, das mit dem Lenkrad (1) des Kraftfahrzeugs verbunden werden kann, wobei das Drucktastenelement (17) mit einem Mittel (20) ausgestattet ist, um eine auf das Drucktastenelement (17) ausgeübte Kraft an das Kranzelement (2) zu übertragen.

10. Manuelle Betätigungsvorrichtung nach Anspruch 9, **dadurch gekennzeichnet, dass** das Drucktastenelement (17) für eine Montage auf der dem Fahrer zugewandten Seite des Lenkrads eingerichtet ist.

11. Manuelle Betätigungsvorrichtung nach Anspruch 9, **dadurch gekennzeichnet, dass** das Drucktastenelement ein Hebel ist, der mit einer Umschlageinrichtung (19) verbunden ist, welche an der Lauffläche (1a) des Lenkrads (1) befestigt werden kann.

12. Manuelle Betätigungsvorrichtung nach Anspruch 11, **dadurch gekennzeichnet, dass** der Hebel an der Umschlageinrichtung (19) so montiert ist, dass sich die Platzierung des Hebels innerhalb der Lauffläche (1a) des Lenkrades derart ergibt, dass er ohne Lösen des Griffs der Hände vom Lenkrad betätigt werden kann.

13. Manuelle Betätigungsvorrichtung nach Anspruch 9, **dadurch gekennzeichnet, dass** das Mittel zum Übertragen des auf das Drucktastenelement (17) ausgeübten Schubes auf das Kranzelement (2) aus einer mit dem Drucktastenelement (17) verbundenen und für das Anliegen an und das Verschieben durch das Kranzelement (2) geeigneten Endabschnitt (21) besitzt.

14. Manuelle Betätigungsvorrichtung nach Anspruch 13, **dadurch gekennzeichnet, dass** dem Drucktastenelement (17) Federmittel zugeordnet sind, um es in eine Ruhestellung zurückzuziehen, in welcher die Druckeinrichtung (20) von dem Kranzelement getrennt ist.

## Revendications

1. Dispositif d'actionnement manuel à utiliser pour la conduite d'un véhicule à moteur, en particulier pour aider des personnes handicapées au niveau de l'usage des jambes, comprenant un élément à cercle (2) destiné à être disposé en dessous du volant (1) du véhicule à moteur, de manière sensiblement coaxiale au volant, ledit élément à cercle (2) étant monté de manière mobile par rapport à une structure de support (4) dans une direction sensiblement parallèle à l'axe du volant (1) pour contrôler une fonction opérationnelle du véhicule à moteur, comme par exemple la fonction d'accélérateur ou la fonction de frein, **caractérisé en ce que** ledit élément à cercle (2) peut être déplacé indifféremment dans deux directions opposées à partir d'une position de repos et **en ce que** dans les deux directions de mouvement, le cercle active la même fonction opérationnelle, par exemple la fonction d'accélérateur ou la fonction de frein.

2. Dispositif d'actionnement manuel selon la revendication 1, **caractérisé en ce qu'**il comprend des moyens de ressort pour ramener l'élément à cercle (2) vers sa position de repos après qu'il a été éloignée de celle-ci dans une quelconque de ses deux directions de déplacement.

3. Dispositif d'actionnement manuel selon la revendication 2, **caractérisé en ce qu'**il comprend un élément de butée (10) pouvant être déplacé avec l'élément en cercle (2) et disposé entre deux surfaces fixes opposées (11, 12) et **en ce que** lesdits moyens de ressort comprennent un premier et un deuxième ressort (8, 9) dont chacun est intercalé entre ledit élément de butée (10), d'un côté, et une desdites surfaces fixes opposées (11, 12), de l'autre côté.

4. Dispositif d'actionnement manuel selon la revendication 3, **caractérisé en ce que** le dispositif comprend une plaque (3) fermement connectée à l'élément à cercle (2) et montée de manière coulissante sur un élément longitudinal de guidage (4) faisant partie de ladite structure de support, ledit élément de butée (10) étant porté en commun avec les deux ressorts (8, 9) par ladite plaque (3) et lesdites surfaces fixes opposées (11, 12) étant définies par des éléments fixés audit élément de guidage (4).

5. Dispositif d'actionnement manuel selon la revendication 4, **caractérisé en ce que** les deux ressorts (8, 9) sont deux ressorts hélicoïdaux coaxiaux disposés l'un derrière l'autre.

6. Dispositif d'actionnement manuel selon la revendication 4, **caractérisé en ce que** ledit élément longitudinal de guidage (4) est un profilé avec une section transversale sensiblement en forme de U, et **en ce que** ladite plaque (3) est montée de manière coulissante sur ledit élément longitudinal de guidage (4) au moyen de deux rails de guidage opposés (6) portés par les deux ailes (4a) du profilé en forme de U (4) et une pluralité de roues (7) portées par ladite plaque (3) et pouvant tourner librement autour d'axes (7a) orthogonaux à la plaque (3) et en engagement de roulement, à l'intérieur du canal du profilé en forme de U (4), avec l'un ou l'autre desdits rails de guidage (6).

7. Dispositif d'actionnement manuel selon la revendication 1, **caractérisé en ce qu'**il présente un amortisseur (15) approprié pour contrôler la course de retour de l'élément à cercle (2) vers sa position de repos.

8. Dispositif d'actionnement manuel selon la revendication 4, **caractérisé en ce qu'**il a un dispositif d'amortissement à fluide approprié pour contrôler la course de retour de l'élément à cercle vers sa position de repos, ledit dispositif d'amortissement à fluide étant opérationnellement intercalé entre ladite plaque (3) et ledit élément de guidage (4).

9. Dispositif d'actionnement manuel selon la revendication 1, **caractérisé en ce que** le dispositif comprend au moins un élément à presse-bouton (17) pouvant être associé au volant (1) du véhicule à moteur, ledit élément presse-bouton (17) étant équipé de moyens (20) pour transmettre audit élément à cercle (2) une force exercée sur l'élément presse-bouton (17).

10. Dispositif d'actionnement manuel selon la revendication 9, **caractérisé en ce que** ledit élément presse-bouton (17) est agencé pour être monté sur le côté du volant faisant face au conducteur.

11. Dispositif d'actionnement manuel selon la revendication 9, **caractérisé en ce que** ledit élément presse-bouton est un levier articulé à un organe à manchette (19) pouvant être fixé sur la couronne (1 a) du volant (1).

12. Dispositif d'actionnement manuel selon la revendication 11, **caractérisé en ce que** ledit levier est monté sur ledit organe à manchette (19) de telle manière que le levier soit positionné à l'intérieur de la couronne (1a) du volant afin de pouvoir être actionné sans relâcher la prise des mains sur le volant.

13. Dispositif d'actionnement manuel selon la revendication 9, **caractérisé en ce que** lesdits moyens pour transmettre la poussée exercée sur l'élément presse-bouton (17) à l'élément à cercle (2) consistent en un moyen poussoir (20) connecté à l'élément presse-bouton (17) et ayant une partie d'extrémité (21) appropriée pour être mise en contact de poussée avec l'élément à cercle (2).

14. Dispositif d'actionnement manuel selon la revendication 13, **caractérisé en ce qu'**à l'élément presse-bouton (17) sont associés des moyens de ressort pour le ramener vers sa position de repos dans laquelle ledit moyen poussoir (20) est séparé dudit élément à cercle.
